# EUROPEAN PATENT APPLICATION

(11) **EP 1 538 429 A2**
(43) Date of publication of application: **08.06.2005**
(21) Application number: 04380245.3
(22) Date of filing: 01.12.2004
(51) Int. Cl.: G01J 1/00

(54) **Radiant power measurement device for extensive surfaces and operation method**

(30) Priority: 01.12.2003 ES 200302820
(71) Applicant: CENTRO DE INVESTIGACIONES ENERGETICAS MEDIOAMBIENTALES Y TECNOLOGICAS (C.I.E.M.A.T.), E-28040 Madrid (ES)
(72) Inventor: Ballestrin Bolea, Jesus, Almeria (ES); Monterreal Espinosa, Rafael, Almeria (ES)
(74) Representative: Garcia-Cabrerizo y del Santo, Pedro Maria

(57) **Abstract**

It comprises two systems mechanically supported by a mobile bar (3). The first system is an indirect measurement system and consists of a Lambertian target (1) diffusely reflecting the incident radiation thereon. A CCD camera (10) records in matrix form of illumination levels the thermal radiation reflected by the Lambertian target (1) when it is stopped in the area object of study. The second system is a direct measurement system and consists of a set of thermopile-type fast response calorimeters assembled in a calorimeter bar (2), without cooling by water and located adjacent to the Lambertian target (1). When these calorimeters pass in front of the area to be studied, they collect precise measurements of the incident power density thereon, without needing to stop. The incident power measurements obtained with both systems can thus be compared, improving the reliability of the measurement.

## Description

### OBJECT AND FIELD OF APPLICATION

The present invention refers to the carrying out and operating of a radiant power measurement system based on new concepts increasing the reliability of the measurement of this magnitude.

By means of the device of the invention, the aim is to cover most of the needs of the measurement of radiant power on wide surfaces and can be used in a multitude of applications in which it is necessary to know the measurement of said magnitude in a reliable manner. In this sense, this device, for example, working with the new concept, can mainly be used for:
- Carrying out the measurement of the incident solar radiation power on the opening of solar receivers. and furthermore:

- Carrying out the measurement of the incident solar radiation power on other solar devices, such as photovoltaic panels.
- Carrying out the measurement of the thermal radiation power coming from combustion processes.
- Carrying out the measurement of the thermal radiation power in fusion plasma diagnostic processes.

The device, which will be described in detail below, incorporates the concept of radiant power dual measurement providing the measurement of this magnitude with a high reliability, while at the same time enabling carrying out a predictive-type maintenance of the calibration of both systems. The standard preventive-type maintenance is tedious and forces stopping the normal course of the measurement process. These concepts, combined with the type and number of applications in which it can be used, the use of fast response calorimeters, enable a direct power measurement without cooling by water. This hybrid system is the result of the experience of CIEMAT (Center for Energy, Environmental and Technological Research) in its facilities of the "Plataforma Solar" (Solar Platform )in Almeria, spanning more than fifteen years in the evaluation of solar receiver prototypes for CRS (Central Receiver System)-type plants.

Throughout this document, the following terms will be used with the meaning which is described:
*Heliostat:* A device carrying out the controlled movement of reflective surfaces for the purpose of reflecting the solar rays in a certain direction.
*Heliostat field:* A set of heliostats belonging to a solar plant arranged in an enclosed terrain.
*Power tower:* In solar plants with a heliostat field, the power tower is the one enabling housing the receiver in an elevated site to intercept the thermal energy concentrated and reflected by the mirrors of the heliostats. This type of concentrating solar thermal plants are called "Solar Power Tower Plants" or "Central Receiver Solar Plants".
*Reflective surface:* This one, supported and guided by the heliostat, reflects most of the solar radiation falling thereon.
*Solar furnace:* A solar furnace essentially consists of a group of flat heliostats carrying out a continuous solar tracking, a parabolic mirror concentrator, an attenuator or shutter, and the testing area situated in the focal point of the concentrator. The flat trapping mirror reflects the parallel and horizontal solar rays on the parabolic dish, which again reflects them, concentrating them at its focal point (testing area). The amount of incident light is regulated by means of the attenuator situated between the concentrator and the heliostat. Its field of application mainly comprises the testing of materials, both in ambient conditions and in controlled atmospheric or vacuum conditions, and solar chemistry experiments by means of receivers associated to chemical reactors.
*Calorimeter:* A small sensor providing a precise value of the incident surface power density on its detector surface. The transducer of these sensors is usually of the thermocouple-type and the generated signal is in volts.
*Thermopile:* A set of thermocouples connected in series. A calorimeter based on this transducer has greater sensitivity and a faster response than that based on a standard thermocouple. The generated signal is in volts.
*CCD camera:* The term CCD means Charge Coupled Device. A CCD is a solid-state sensor. When the semiconductor is exposed to light, the photoelectric effect releases electrons bonded to atoms. These free electrons (or "holes" according to the type of semiconductor) are collected in potential wells. When the exposure to light ends, the potential wells are emptied, taking the electrons to a reading register. The number of electrons is encoded in an electrical signal which a computer later interprets as a grey level for each pixel ("picture element"). During a CCD reading process, the shifting of the charges accumulated in the different pixels occurs, obtaining a two-dimensional image.

### BACKGROUND OF THE INVENTION

In the early 1980s, a significant number of experimental Solar Power Tower Plants came about, motivated to develop a new, clean and non-depletable energy source, solar energy.

The following projects came about:

| **Name** | **Year** | **Location** | **Pow. (MWe)** | **Heliostat type** | **No. hel./Surf. (m**²) |
|---|---|---|---|---|---|
| SSPS-CRS | 1981 | Almeria-Spain | 0.5 | Martin Marieta | 93/3655 |
| Eurelios | 1981 | Adrano-Italy | 0.7 | | 182/6216 |
| Sunshine | 1981 | Nio-Japan | 0.8 | | 807/12912 |
| Themis | 1982 | Targassone-France | 2.5 | | 201/10800 |
| SOLAR ONE | 1982 | Barstow-USA | 10 | Martin Marieta | 1818/71447 |
| CESA-1 | 1983 | Almeria-Spain | 1 | CASA and SENER | 300/11880 |
| SPP-5 | 1985 | Crimea-Russia | 5 | | 1600/40000 |
| WISS | 1988 | Rehovot-Israel | 3 | ASINEL | |

The objective of these plants was to prove technical viability in the production of electricity starting from solar energy by means of the use of power tower plants with heliostat fields.

Once the demonstration projects were concluded, most of these plants were closed. In Europe, only those heliostat fields corresponding to the CRS and CESA-1 plants continued to operate as a result of a collaboration agreement between the German and Spanish governments, the "Plataforma Solar" (Solar Platform) in Almería, PSA, being constituted.

In the United States, the SOLAR ONE plant was remodeled and, with the same heliostat field, the SOLAR TWO plant began to operate, which was functioning up until a short time ago.

The PSA currently continues to operate these heliostat fields as a result of a large diversity of projects which have been carried out in the last few years. The objective of these projects has been the development and evaluation of new solar components in this technology, mainly solar receivers (GAST, RAS, TSA, REFOS, HITREC,...), which have been tested at different heights of the power towers.

A fundamental result in the evaluation of a receiver is its efficiency, given that the design and sizing of the future plant will be supported on this data, among others. This is why the correct measurement of the incident solar energy on the opening of the evaluated receiver prototypes is crucial. The systems used to carry out this measurement use different sensors (calorimeters) which are smaller in comparison with the area of the opening of the receivers. The total incident power in the receiver is obtained from these individual measurements of the energy flux density (kW/m²) of the sensors by means of different techniques.

The previously mentioned techniques are two clearly different techniques:
- **Direct measurement:** This technique basically consists of doing a scan of the opening of the receiver with a metal bar where a number of calorimeters, which will depend on the size of the opening, are housed. The incident power in the receiver is obtained from these precise measurements of the sensors. The first direct systems used (HFD, MFV) were of this type, but they had restrictions, forcing them to be left aside as the indirect measurement technique appeared. The fact that the calorimeters used had a response time (1/e) of about 0.5 seconds made it necessary for the sensors and the bar to stop for at least one second to take the measurement. Due to the high levels of solar radiation received, it was necessary to cool the sensors and the bar. The result of the measurement was a data matrix with a poor spatial resolution. Currently, the appearance of thermopile-type calorimeters with response times of about 10⁻⁵ seconds has brought about choosing systems again based on this philosophy. These fast response sensors combined with an also fast data acquisition system enable doing a scan of the area of the receiver in very few seconds without needing to cool with water. The result of the measurement is a data matrix with a considerable improvement in the spatial resolution. The resulting system (DMF, Direct Measurement of Flux) has been designed and tested in PSA, has suffered no deterioration and provides a reliable measurement of solar power.
- **Indirect measurement:** This technique is based on three fundamental components: CCD (Charge Coupled Device) camera, Lambertian target and calorimeter. For an instant, the Lambertian target covers the opening of the receiver diffusely reflecting the solar radiation; the CCD camera, situated in a caravan in the central portion of the heliostat field, takes an image of the illumination levels corresponding to the opening of the receiver. To convert the value of these illumination levels into physical units, it is necessary to calibrate the grey scale of the CCD camera. To that end, a calorimeter is placed in a continuous manner near the opening of the receiver. The Lambertian target systematically covers the calorimeter, this fact permitting relating the brightness level of the area of the target covering the calorimeter with the measurement of the power density given by the sensor an instant immediately before or after. The repetition of this process for different power levels enables obtaining a calibration function with which the brightness level matrices can be converted into power density matrices. The ProHERMES2 system has recently been developed and tested in PSA. This system contemplates all the improvements with regard to features of the CCD camera and use software which the first systems did not contain, among which it is important to point out BCS, OSIRIS and VISIR, nor did its predecessors HERMES (Heliostats and Receiver MEasurement System), HERMES II and ProHERMES (Programmable HERMES).

Direct (SAI) and indirect (FAS and PAIS) measurement systems for the characterization of heliostats have parallelly been developed in the past. Indirect systems (FATMES) for measurement in solar furnaces have also been developed.

| **Name** | **Year** | **Procedure** | **Place/Nationality** | **Systems evaluated/Place of use** |
|---|---|---|---|---|
| BCS | 1979 | Indirect | Barstow-USA/ North American | Solar One receiver |
| FAS | 1981 | Indirect | Almeria-Spain/Swiss | Heliostat characterization |
| HFD | 1981 | Direct | Almeria-Spain/German | Sodium salt receivers (ASR, SULZER) |
| HERMES | 1983 | Indirect | Almeria-Spain/German | Heliostat characterization, COR-REC receivers |
| SAI | 1985 | Direct | Almeria-Spain/Spanish | Heliostat characterization |
| PAIS | 1985 | Indirect | Almeria-Spain/German | Heliostat characterization |
| OSIRIS | 1985 | Indirect | Almeria-Spain/Spanish | GAST receiver |
| VISIR | 1985 | Indirect | Almeria-Spain/German | GAST receiver |
| FATMES | 1986 | Indirect | Coln-Germany/German | Solar furnace |
| MFV | 1988 | Direct | Almeria-Spain/Spanish | Bochum, CATREC I, CATREC-II receivers |
| HERMES II | 1992 | Indirect | Almeria-Spain/German | Heliostat characterization, TSA, Didier, RAS receivers |
| ProHERMES | 1997 | Indirect | Almeria-Spain/Spanish | Heliostat characterization, HITREC I, REFOS I, REFOS II receivers |
| ProHERMES 2 | 2001 | Indirect | Almeria-Spain/Spanish | Heliostat characterization, HITREC-II, SIREC-1, SOLAIR-200 receivers |
| MDF | 2001 | | Almeria-Spain/Spanish | HITREC-II, SIREC-1 receivers |

The experience accumulated over the years has clearly shown that both systems easily lose their original calibration. To date, no radiant power measurement system has incorporated the two processes defined in the present invention due to incompatibilities which obliged working with them independently. The sensors used in prior direct systems had response times of about half a second, which made it necessary for the bar to stop for at least one second during each measurement so that the latter would not be distorted. This requirement made it impossible to use an adjacent Lambertian target, given that since it was subjected to high levels of concentrated solar radiation for prolonged exposures, it would end up being destroyed. All the previous systems, therefore, consider only the two mentioned measurement modes. The carrying out of two simultaneous measurements of the radiant power increases the reliability in the calculation of said magnitude. Furthermore, the new system provides features making it possible to carry out operations modes that could not be done for its predecessors. The incorporation of fast response calorimeters enables carrying out a direct measurement of the radiant power without cooling by water, without needing to stop the bar and with a spatial resolution that was unthinkable for previous direct systems. The direct system thus defined enables quickly scanning large surfaces reducing the concentrated solar radiation exposure time, dispensing with cooling systems. A direct measurement system can thus be used simultaneously with the indirect system, which enables full comparison of the measurements, with the subsequent increase of the reliability of the latter and the "*in situ*" monitoring of the calibration.

Patent document ES 2,142,267 entitled "Device for Measuring Concentrated Light Radiation", discloses a device for measuring concentrated light radiation. The detailed device comprises a reflector, arranged at a slope and which can be transversally shifted with regard to the incident light, and a camera, which is arranged with its optical focus approximately parallel to the direction of shift of the reflector and captures the light reflected by the latter. This patent partially shows the basis of what has been called indirect measurement systems (BCS, FAS, HERMES, PAIS, OSIRIS, VISIR, FATMES, HERMES II, ProHERMES and ProHERMES 2) based on the use of a camera capturing the light reflected by a reflector systematically covering the area on which the incident power is to be measured. However, this patent does not describe any physical association incorporating two independent measuring systems (direct and indirect) which enables contrasting measurements. Said document literally assures that: "*The flux density of solar radiation concentrated in the focal spot can be measured by means of calorimeters. This process is laborious since the calorimeters run, step-by-step, above the plane of the focal spot (Direct system) and have to be stopped at every step for the* *measurement. The scanning of a surface of several square meters requires* at *least a few minutes. As a result, it is not possible to carry out measurements during transitory phenomena*, *such as the passing of clouds, by means of this measuring procedure*." This affirmation can be rectified and now it can be said that "*measurements can be carried out during transitory phenomena with a direct system such as the one described in this patent application*." Not only does the device described in the present patent application disagree with patent document ES 2,142,267, but rather it makes possible that which was described as impossible in said document.

### DESCRIPTION OF THE INVENTION

The structural components of the invention are:

### Mobile bar:

This bar will hold a Lambertian target and a fast response calorimeter bar. It will be made of carbon steel, being cylindrical in shape and hollow inside so that the Teflon cables of the calorimeters can pass longitudinally through it. It will pivot at one point situated under the receiver in the vertical line passing through the center of the opening of the receiver and will move with an angular velocity adapted to the measurement as a result of a continuous current motor.

### Direct system:

The calorimeter bar will be made of carbon steel or of another metal with a high melting temperature. The dimensions of the bar and the distribution of calorimeters therein will be suitable for scanning the surface of interest. The calorimeters will be of the fast response thermopile-type. The calorimeter bar will be closed on the sides and in the rear portion with aluminum painted white for the purpose of protecting the radiation sensors.

The signals from all the calorimeters will be recorded by a data acquisition system with the suitable number of channels, acquisition speed and resolution.

### Temperature control:

A thermocouple will be housed inside the calorimeter bar and will indicate the temperature the system reaches at all times. In no case will the system operate with temperatures exceeding 200°C in order to prevent deterioration of the Teflon wiring of the calorimeters and other components integrating the hybrid system. The signal coming from this thermocouple will be recorded by the same system recording the signals of the fast response calorimeters.

### Indirect system:

The Lambertian target will be formed of aluminum plates pained with a diffuser paint on the portion thereof exposed to the radiation. The dimensions of the target will be suitable for covering the area of interest. The target will be stopped for about 3 seconds in order to ensure that it is completely stopped, a short distance from the opening of the receiver and in a plane parallel thereto, diffusely reflecting the incident solar power.

A small calorimeter cooled by water will be situated in a continuous manner in an area close to the surface object of study. The signal coming from this calorimeter will be recorded by the same system recording the signals of the fast response calorimeters.

A CCD camera with suitable spatial resolution will be situated in the central portion of the heliostat field protected from the external conditions and at an appropriate distance.

The operating method is as follows:

Before beginning the measurement process, the mobile bar will be in its idle position safeguarding the fast response calorimeter and the Lambertian target from the solar radiation concentrated by heliostats.

When the measurement begins, the continuous current motor will act on the mobile bar which will pivot and make the calorimeter bar and the Lambertian target pass in front of the opening of the receiver in a plane parallel to its surface and very close thereto.

In the outward movement of the bar, the fast response reference calorimeter will stay behind the first steel indicator, indicating the entrance of the system into the area of interest. The time signal coming from this sensor will undergo a decrease indicative of that instant. When this calorimeter reaches the second steel indicator, it will mean that the calorimeter bar is leaving the area of interest. The two time references which will enable identifying the data coming from the fast response calorimeter acquired in the area of interest will thus be obtained. The angular velocity of the bar will also be obtained from the time difference indicated by the fast response reference calorimeter when it reaches the two successive steel indicators, and the angle sustained by these two references and the mobile bar will also be obtained.

The positions corresponding to the measurements carried out by the fast response calorimeters referring to the center of the opening of the receiver can be determined from the angular velocity of the bar. The data matrix of the power density at the opening of the receiver will thus be obtained.

After reaching the second steel indicator, the mobile bar will stop for three seconds, the Lambertian target covering the opening of the receiver, diffusely reflecting the solar radiation; the CCD camera, situated in a caravan in the central portion of the heliostat field, will take an image of illumination levels corresponding to the opening of the receiver. To convert the values of this matrix into physical units, it will be necessary to have previously calibrated the CCD-target assembly. To that end, a calorimeter will have been placed, in a continuous manner, near the opening of the receiver. The Lambertian target will systematically cover the calorimeter, this fact enabling relating the illumination level of the area of the target covering the calorimeter with the measurement of the power density provided by the sensor an instant immediately before or after. The repetition of this procedure for different power levels enables obtaining a calibration function with which the illumination level matrices of the gray scale of the camera can be converted into power density matrices.

Once the CCD camera has taken the image, the mobile bar will return to its parking position, following the same trajectory as its outward route.

After the measurement is taken, the thermocouple will indicate an increase in the temperature of the system, being necessary to wait in the parking position for a period of time before carrying out the next measurement.

The computers controlling the acquisition of the images by the CCD camera and the signals coming from the different sensors will be synchronized at all times.

Relevant aspects of the invention are:

### Structure of the measurement system

The measurement system of the invention is developed starting from components already existing in the PSA and operating in CRS tower at 43 meters high, a level at which solar receivers are evaluated. To that end, the fast response calorimeter bar has been coupled adjacent the Lambertian target. The assembly is supported by a mobile bar holding the target by its rear portion.

### Mobility

A continuous current motor acts on the mobile bar, making it pivot from the idle position, achieving that the calorimeter bar transversally traverses the area of interest and that the Lambertian target stops for a few instants in front of said surface. Once the CCD camera takes the image reflected by the target, the bar returns to its parking position, achieving that the fast response calorimeters scan the area of interest again.

### Data acquisition systems

The CCD camera is located in the central portion of the heliostat field. A computer and software act on the card controlling the camera and recording the images coming from the Lambertian target.

The signals coming from the calorimeters are recorded by an acquisition card with an A/D converter situated in the highest portion of the tower. The data are transferred through optical fiber to a computer situated in the control room and from which the acquisition of the data is controlled as a result of software for that purpose.

### Safety

The wiring of these calorimeters is embedded at the rear portion of the target towards the bar supporting the entire structure and providing mobility to the system. The wiring is thus protected from the incident radiation and reaches the data acquisition system also protected in the CRS tower. The calorimeter bar is in turn closed at its rear and side portions, preventing radiation.

From where the mobile bar begins its movement, a safety compartment protects the system from the incident radiation when it is idle and not carrying out measurements.

Several thermocouples located in different portions of the calorimeter bar indicate the temperature thereof. If it is very high, due to the energy accumulated in the previous measurement, the bar must remain in the parking position until it is considered that its temperature is low enough to carry out another radiation measurement.

### Reliability

The ability to obtain two simultaneous measurements of the power with independent systems increases the reliability of this magnitude. The possible loss of calibration of the direct and indirect systems forces establishing periodic control procedures detecting the possible error in the measurement of the incident power; these procedures are low and interrupt the normal development of the experiments.

### Continuous mode measurement

As a result of the previously described direct system, it is possible to measure the incident power on a wide surface by scanning the latter with the bar in a continuous mode without needing to stop.

### Flexibility

This system can be adapted to different situations when the geometry of the area object of study so requires this. All the previous systems have been used to measure the incident power on two-dimensional areas. The new system can be adjusted to and measure the incident power on three-dimensional areas. In this case, the indirect component would be at a disadvantage since it would be limited by the angle of vision of the CCD camera.

### BRIEF DESCRIPTION OF THE DRAWINGS

To complete the description made and for the purpose of aiding to better understand the features of the invention, a detailed description of a preferred embodiment will be carried out, based on a set of schemes attached to this specification, forming an integral part thereof, and in which the following has been depicted with a merely orientative and non-limiting character:

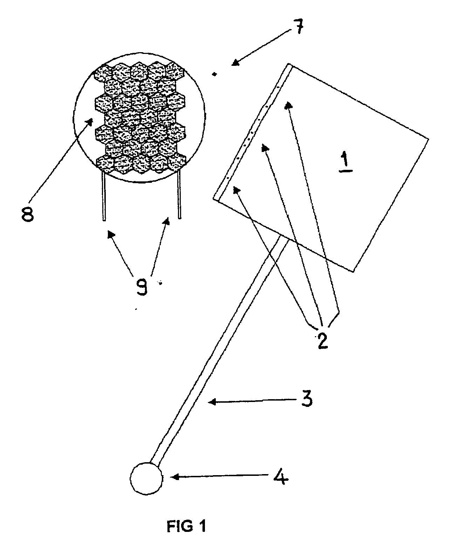

Figure 1 depicts a view of the front portion of the measurement device of the invention.

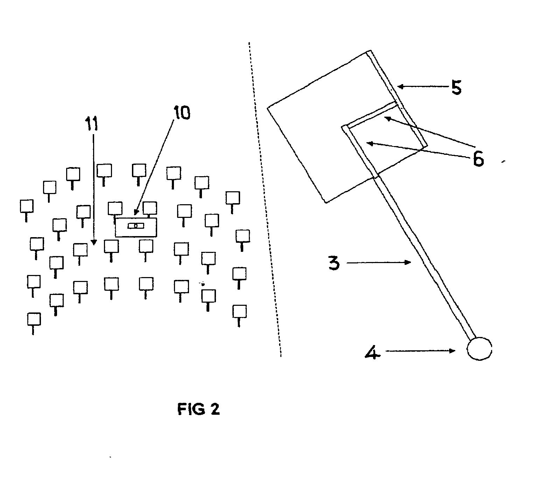

Figure 2 depicts a view of the rear portion of the measurement device of the invention. In the back of the heliostat field is where the CCD camera, safeguarded in a caravan, is located.
The reference numbers in the described figures correspond to the following parts and elements:
   1. Lambertian target
   2. Fast response calorimeter bar
   3. Mobile bar
   4. Pivoting point
   5. Fast response calorimeter protection
   6. Groove for protecting wiring
   7. Calorimeter cooled by water
   8. Surface of interest
   9. Indicators
   10.CCD camera
   11.Heliostat field

### DESCRIPTION OF A PREFERRED EMBODIMENT

An hybrid radiant power measurement system will be put into operation in PSA, constituting a preferred application of the object of the invention.

It is an hybrid system designed to measure the incident power on the surface of interest (8) constituting the opening of a solar receiver. This opening will be contained in a circle of 0.880 meters in diameter. Both the receiver and the measurement system are located 43 m high, at the CRS tower testing level.

### Mobile bar:

A mobile bar (3) will hold a Lambertian target (1) and a fast response calorimeter bar (2). It will be made of carbon steel, being cylindrical in shape and hollow inside so that the Teflon cables of the calorimeters can pass longitudinally through it. Its length will be 1.705 m and outer diameter 8 centimeters. It will be susceptible to rotating at a pivoting point (4) situated under the receiver at 2.095 meters in the vertical line passing through the center of the opening thereof and will move with an angular velocity of 0.21 rad/s as a result of a continuous current motor.

### Direct system:

The calorimeter bar (2) will be made of carbon steel and will have the following dimensions: 1045 mm long, 40 mm wide and 15 mm thick. Eight Vatell® brand (HFM-7E/L and HFM-6C/L models) fast response calorimeters of 6.32 mm diameter will be located in the bar at the positions of 172 mm, 322 mm, 422 mm, 472 mm, 522 mm, 622 mm, 722 mm and 872 mm from the lower end of the bar, and closer to the center given that it is expected that the peak of the power density distribution is in that area. The average spatial resolution in the vertical direction will be 100 mm.

The calorimeter bar (2) will be closed on the sides and in the rear portion with aluminum painted white for the purpose of protecting the radiation sensors.

The signals from all the calorimeters will be recorded by the 6031E (National Instruments®) card with 32 differential analog channels. The card will be integrated in a PXI/CPCI (National Instruments®) module, which will transfer the data to a PC situated in the control room located in the tower by means of optical fiber.

Acquisition of the data coming from the calorimeters will occur with a sampling speed of 40 data/s, which combined with the angular velocity of the bar of 0.21 rad/s, provides the direct system with a spatial resolution in the horizontal direction of 10-13 mm.

Two carbon steel cylindrical indicators (9) will serve as a reference to indicate to the fast response calorimeter of the position of 172 mm when they are inside and outside of the area of interest. The indicators (9) will produce a shadow on the calorimeter when it passes behind the former, which will generate a decrease in the time signal of the sensor, the exit and entrance instants of the bar in the surface of interest (8) being able to thus be determined.

### Temperature control:

A K-type thermocouple will be housed inside the calorimeter bar and will indicate the temperature the system reaches at all times. In no case will the system operate with temperatures exceeding 200°C in order to prevent deterioration of the Teflon wiring of the calorimeters and other components integrating the hybrid system. The signal coming from this thermocouple will be recorded by the same system recording the signals of the fast response calorimeters.

### Indirect system:

The Lambertian target (1) will be formed of aluminum plates pained with a diffuser paint (Amercoat™ 747) on the portion thereof exposed to the radiation. The dimensions of the target will be 1.030 meters wide by 1.045 meters long. This surface will stop for about 3 seconds at 25 cm from the opening of the receiver and in a plane parallel thereto, diffusely reflecting the incident solar power.

A Vatell® brand calorimeter (7) (1000 model) cooled by water, 2.54 cm in diameter, will be situated in a continuous manner in an area close to the surface object of study. The signal coming from this calorimeter will be recorded by the same system recording the signals of the fast response calorimeters.

The CCD camera (10) will have 14-bit digitization and will be of the Hamamatsu Photonics® brand (ORCA II model), with 1024 x 1280 pixels of a size of 6.7 µm x 6.7 µm. The camera will be situated with in the central portion of the heliostat field protected from the external conditions. The camera to receiver distance will be 150 meters, which will provide a spatial resolution of the opening of the receiver of 2 mm/pixel.

The operating method is as follows:

Before beginning the measurement process, the mobile bar (3) will be in its idle position safeguarding the fast response calorimeter bar (2) and the Lambertian target (1) from the solar radiation concentrated by heliostats. The mean and maximum values expected for the surface power density will be variable, but their most extreme values could reach 550 kW/m² and 850 kW/m², respectively.

When the measurement begins, the continuous current motor will act on the mobile bar which will rotate about the pivoting point (4) and make the calorimeter bar (2) and the Lambertian target (1) pass in front of the surface of interest (8) constituting the opening of the receiver in a plane parallel to its surface and at 25 cm therefrom.

In the outward movement of the bar, the fast response reference calorimeter will stay behind the first steel indicator (9), indicating the entrance of the system into the area of interest. The time signal coming from this sensor will undergo a decrease indicative of that instant. When this calorimeter reaches the second steel indicator, it will mean that the calorimeter bar (9) is leaving the area of interest. The two time references which will enable identifying the data coming from the fast response calorimeter acquired in the area of interest will thus be obtained. The angular velocity of the bar will also be obtained from the time differences indicated by the fast response reference calorimeter when it successively reaches the two steel indicators (9), and the angle sustained by these two references and the mobile bar will also be obtained.

The positions corresponding to the measurements carried out by the fast response calorimeters referring to the center of the opening of the receiver can be determined from the angular velocity of the bar. The data matrix of the power density at the opening of the receiver will thus be obtained.

After reaching the second steel indicator, the mobile bar will stop for three seconds, the Lambertian target (1) covering the opening of the receiver, diffusely reflecting the solar radiation; the CCD camera (10), situated in a caravan in the central portion of the heliostat field, will take an image of illumination levels corresponding to the opening of the receiver. To convert the values of this matrix into physical units, it will be necessary to have previously calibrated the CCD-target assembly. To that end, a calorimeter (7) cooled by water will have been placed, in a continuous manner, near the opening of the receiver. The Lambertian target (1) will systematically cover the calorimeter, this fact enabling relating the illumination level of the area of the target covering the calorimeter with the measurement of the power density provided by the sensor an instant immediately before or after. The repetition of this procedure for different power levels enables obtaining a calibration function with which the illumination level matrices of the gray scale of the CCD camera (10) can be converted into power density matrices.

Once the CCD camera (10) has taken the image, the mobile bar (3) will return to its parking position, following the same trajectory as its outward route.

After the measurement is taken, the thermocouple will indicate an increase in the temperature of the system, being necessary to wait in the parking position for a period of time before carrying out the next measurement.

The computers controlling the acquisition of the images by the CCD camera and the signals coming from the different sensors will be synchronized at all times.

## Claims

1. A radiant power measurement device for wide surfaces intended for measuring the power density of a surface of interest (8), **characterized by** comprising:
a mobile bar (3) susceptible to rotating about a pivot point (4) driven by a motor,
a plurality of fast response calorimeters arranged in a calorimeter bar (2) joined to the mobile bar (3),
a Lambertian target (1) joined to the mobile bar (3),
a CCD camera (10) susceptible to focusing on the Lambertian target (1),
a calorimeter (7) cooled by water, arranged in a fixed
manner and close to the surface of interest (8),
intended for calibrating the image obtained by the CCD camera (10),
two indicators (9), arranged such that they conceal from the calorimeter bar (2) the radiation to be measured for the end positions of the surface of interest (8).

2. An operating method of the radiant power measurement device for wide surfaces of claim 1, **characterized by** comprising the following stages:
a) A parking stage, wherein the device remains idle, protected from solar radiation.
b) A direct measurement stage, wherein the device leaves its parking position, approaches the surface of interest (8) in a plane close and parallel thereto, scanning it with the fast response calorimeter bar (2), carrying out a plurality of measurements in a continuous mode, without stopping, of the incident power on the surface of interest (8).
c) An indirect measurement stage, wherein the Lambertian target (1) remains stopped opposite to the surface of interest (8), and the CCD camera (10) takes an image of the brightness levels diffusely reflected by the Lambertian target (1), converting them into a matrix of power densities on the surface of interest (8) by means of the reading of a calorimeter (7) cooled by water arranged in a fixed manner close to the surface of interest (8).
d) A comparison stage between the direct measurement and the indirect measurement, in which it is assumed that the measurement is valid if both values do not differ by an amount exceeding a predetermined value.
e) A stage of returning to the initial position, in which the mobile bar (3) returns to the parking position, following a trajectory equal to that of stage b), but in the opposite direction.
